# FASCICULE DE BREVET EUROPEEN

(11) **EP 0 469 948 B1**
(45) Date de publication et mention de la délivrance du brevet: **11.10.1995**
(21) Numéro de dépôt: 91401980.7
(22) Date de dépôt: 16.07.1991
(51) Int. Cl.: G01B 11/22, G01M 17/02

(54) **Dispositif pour évaluer le degré d'usure des pneumatiques de véhicules**
Einrichtung zur Bestimmung des Abnutzungszustandes von Fahrzeugluftreifen
Apparatus for evaluating the degree of wear of vehicle tyres

(30) Priorité: 24.07.1990 FR 9009419
(43) Date de publication de la demande: 05.02.1992
(73) Titulaire: INSTITUT NATIONAL DE RECHERCHE SUR LES TRANSPORTS ET LEUR SECURITE, 94110 Arcueil (FR); COMPAGNIE FINANCIERE ET INDUSTRIELLE DES AUTOROUTES, F-75016 Paris (FR)
(72) Inventeur: Clerc, Alain, F-94110 Arcueil (FR)
(74) Mandataire: Flavenot, Bernard

(56) Documents cités:
- DE-A- 1 809 459

## Description

La présente invention concerne les dispositifs pour évaluer le degré d'usure des pneumatiques, et plus particulièrement la profondeur de leurs sculptures en vue, par exemple, d'avertir l'utilisateur d'un véhicule lorsque les sculptures de ses pneumatiques ne sont plus assez profondes, indiquant ainsi qu'il y a danger à continuer à rouler avec ces pneumatiques trop usés.

En effet, la grande majorité des véhicules terrestres se déplacent sur le sol au moyen de roues comportant une jante autour de laquelle est monté un pneumatique généralement maintenu en forme par une chambre à air gonflée. Ainsi, lorsque les pneumatiques d'un véhicule sont en bon état et que la pression de gonflage des chambres à air est conforme à celle préconisée par le constructeur des pneumatiques, le véhicule peut rouler en sécurité. Par contre, quand la qualité des sculptures de ces pneumatiques n'est pas bonne, notamment par usure de la bande de roulement, il y a incontestablement danger, plus particulièrement par temps de pluie, et donc risque d'accident accrû. Il est donc primordial que les utilisateurs de véhicules puissent vérifier régulièrement le degré d'usure des pneumatiques.

Les procédés utilisés pour effectuer une telle vérification sont le plus souvent empiriques et il n'existe pas de dispositif permettant de surveiller de façon automatique la qualité des sculptures en surface des pneumatiques de véhicules, sinon celui constitué par un ergot situé dans le fond des sculptures, le pneumatique étant considéré hors d'usage quand la surface de sa bande de roulement arrive au niveau du sommet de l'ergot. En fait, on constate que peu de conducteurs vérifient la position relative de la surface de la bande de roulement par rapport au sommet de l'ergot et que, d'une façon générale, peu d'entre eux font l'effort de vérifier régulièrement l'état des pneumatiques de leur véhicule.

Pour pallier les inconvénients mentionnés ci-dessus, il a été réalisé un dispositif tel que celui décrit dans le DE-A-1 809 459, qui met en oeuvre un procédé essentiellement basé sur l'étude de l'ombre des reliefs des pneumatiques éclairés par une source lumineuse dont les rayons suivent une direction oblique par rapport à la bande de roulement du pneumatique, projetée dans les creux séparant les reliefs. L'étude de cette ombre permet d'évaluer le degré d'usure du pneumatique et peut s'effectuer "à la volée", du fait que le dispositif est positionné dans une tranchée comportant une fenêtre au niveau de la route, la fenêtre étant disposée sur la trajectoire présumée du pneumatique.

Ce dispositif connu correspond à l'état de la technique le plus proche comme défini dans la préambule de la revendication indépendante 1.

Le document FR-A-2 593 599 décrit un procédé et un dispositif de mesurage du relief de la surface d'un objet par rétroféflexion, basés sur la quantification d'un défaut de mise au point d'une image d'un point ou d'une petite surface irradiée par une laser, le relief étant réprésenté par le rapport des intensités de deux faisceaux issus de la séparation d'un unique faisceau réfléchi par la surface.

Les dispositifs connus nécessitent des interventions relativement fréquentes pour effectuer le nettoyage, aussi bien de la sortie de la source lumineuse que des éléments de réception des faisceaux réflechis.

Pour palier cet inconvénient, l'invention propose de modifier le dispositif connu selon la partie caractérisante de la seule revendication indépendante 1.

D'autres caractéristiques et avantages de la présente invention apparaîtront au cours de la description suivante donnée en regard des dessins annexés à titre illustratif, mais nullement limitatif, dans lesquels :
La figure 1 représente un premier mode de réalisation d'un dispositif selon l'invention en coopération avec un pneumatique pour la mesure de la profondeur de ses sculptures,
La figure 2 est un schéma optique permettant d'expliciter le principe de la mesure utilisé avec le dispositif selon la figure 1,
La figure 3 représente une vue illustrant une application avantageuse d'un dispositif selon l'invention,
La figure 4 représente, vu en coupe, un deuxième mode de réalisation d'un dispositif selon l'invention,
La figure 5 représente un détail du dispositif selon la figure 4, et
Les figures 6 et 7 représentent, vue en coupe, une partie d'un mode de réalisation non-revendiqué, dans deux situations de fonctionnement possibles.

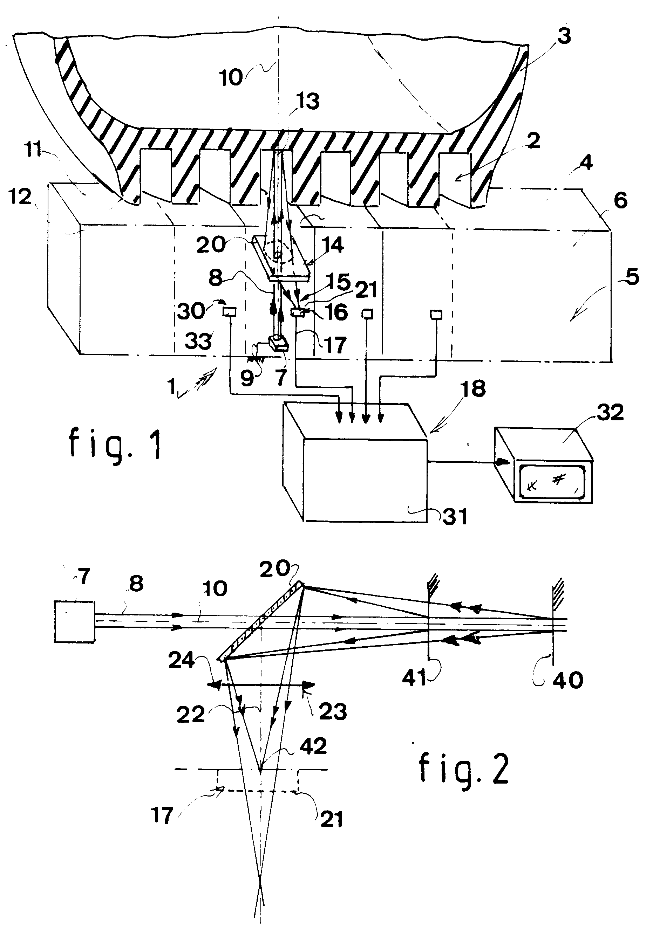

La figure 1 représente un mode de réalisation d'un dispositif 1 pour mesurer "à la volée" la profondeur des sculptures 2 sur la bande de roulement 12 d'un pneumatique 3 de véhicule lorsqu'il passe sur une voie déterminée 4.

Ce dispositif comporte au moins une tranchée 5 réalisée dans la voie 4 au niveau du passage présumé des pneumatiques et débouchant sur la voie par au moins une fenêtre 6.

Une source lumineuse 7 apte à émettre un faisceau lumineux 8 est disposée dans la tranchée 5 par tous moyens 9 de façon qu'elle soit positionnée pour émettre son faisceau lumineux 8 vers la fenêtre 6 de la tranchée et que l'axe optique 10 du faisceaux lumineux émis fasse un angle non nul avec la surface 11 de la voie 4, la valeur de cet angle étant avantageusement sensiblement égal à un angle droit.

Quand la bande de roulement 12 du pneumatique passe sur la fenêtre 6 de la tranchée 5, le faisceau 8 forme sur cette bande une tache lumineuse 13 constituant optiquement un objet lumineux.

Dans un mode de réalisation avantageux, la source lumineuse 7 est constituée par un générateur de rayons laser, tel qu'une diode laser.

Le dispositif comporte en outre un capteur photosensible apte à capter les faisceaux émis par la tache lumineuse 13 et à délivrer un signal représentatif de ces faisceaux.

Avantageusement, le capteur photosensible comporte des moyens 14 pour former une image 15 de l'objet lumineux 13. A ces moyens 14 sont associés des moyens 16 pour analyser qualitativement et quantitativement l'image 15 formée et pour délivrer, sur une sortie 17, un signal représentatif du résultat de cette analyse.

A ce capteur photosensible sont associés des moyens 18 pour traiter le signal qu'il délivre et en déduire la profondeur des sculptures 2 sur la bande de roulement du pneumatique 3.

Dans un mode avantageux de réalisation, les moyens 16 pour analyser l'image 15 et pour délivrer un signal représentatif de cette image comportent une lame semi-transparente et réfléchissante 20 inclinée sur l'axe optique 10 du faisceau lumineux 8, un récepteur photosensible 21 disposé sur l'axe optique 22 conjugué, par la lame 20, de l'axe optique principal 10 passant par la tache lumineuse objet 13 sur le pneumatique 3, et un élément focalisateur 23, par exemple une lentille convergente 24, avantageusement disposé sur l'axe optique 22 entre la lame 20 et le récepteur photosensible 21.

Les moyens 18 pour déduire, de la valeur du signal obtenu à la sortie 17, la profondeur des sculptures sur la bande de roulement du pneumatique 3, comportent des moyens 30 pour élaborer un signal de référence correspondant à une position de référence de la bande de roulement des pneumatiques, des moyens 31 pour comparer le signal représentatif de l'image 13 avec le signal de référence et, avantageusement, en sortie des moyens de comparaison 31, des moyens d'affichage 32 permettant de visualiser le résultat de la comparaison.

Les moyens 30 pour élaborer le signal de référence comportent très avantageusement au moins une seconde tranchée ouverte réalisée dans la voie au niveau du passage présumé du pneumatique, cette seconde tranchée pouvant être réalisée d'une seul tenant avec la première tranchée 5 mentionnée ci-dessus. L'axe de la tranchée est avantageusement perpendiculaire à la direction de roulement du pneumatique et les moyens 30 comportent en outre une seconde source lumineuse 33 apte à émettre un second faisceau lumineux, des seconds moyens pour positionner la seconde source 33 dans la seconde tranchée de façon qu'elle puisse émettre le second faisceau lumineux vers l'ouverture de la seconde tranchée et que l'axe optique de ce second faisceau lumineux fasse un angle non nul avec la surface de la voie 4, des seconds moyens pour former une seconde image de l'objet lumineux constitué par la tache lumineuse que forme le second faisceau sur la bande de roulement comportant les sculptures du pneumatique lorsqu'il passe sur la seconde tranchée, ces seconds moyens étant structurellement identiques à ceux décrits ci-dessus et référencés 16. Le dispositif comporte en outre des moyens pour analyser la seconde image et délivrer un second signal représentatif de cette image et constituant en fait, dans ce mode de réalisation, le signal de référence mentionné ci-avant.

Comme les signaux d'analyse et de référence sont généralement des signaux électriques, les moyens de comparaison 31 sont constitués par un comparateur électronique et l'élément d'affichage est un écran lumineux, par exemple du type vidéo.

Le dispositif décrit ci-dessus fonctionne de la façon suivante :

Il est tout d'abord supposé que la mesure de la profondeur des sculptures d'un pneumatique se fait en un seul point de sa bande de roulement et que le principe de cette mesure est schématiquement illustré sur la figure 2.

Lorsque le pneumatique passe sur la fenêtre de la tranchée, il coupe le faisceau lumineux émis par la source lumineuse, ce qui permet de former une tache lumineuse, soit dans le fond des sculptures du pneumatique, comme illustré sur la figure 1 et schématiquement représenté en 40 sur la figure 2, soit sur le sommet d'une sculpture, c'est-à-dire en fait la bande de roulement 12 qui se trouve au contact des bords de la fenêtre 6 de la tranchée 5 comme illustré en 41 sur la figure 2.

Dans le cas où la tache lumineuse se trouve sur le fond 40 entre deux reliefs de la sculpture, la lentille convergente 24 forme une première image 42 sensiblement ponctuelle sur la cellule photosensible 21 qui peut ainsi délivrer à sa sortie 17 un signal représentatif d'une densité lumineuse importante.

Par contre, quand le faisceau lumineux tombe sur le sommet 41 d'un relief de la sculpture, la lentille convergente 24 forme, de la tache lumineuse, une image qui est focalisée en arrière de la surface réceptrice de la cellule photosensible 21 comme représenté sur la figure 2, donnant donc sur cette surface réceptrice une image à faible densité lumineuse. De cette façon, la cellule 21 va délivrer à sa sortie 17 un signal qui sera représentatif de cette faible densité lumineuse.

La comparaison de la valeur de deux signaux tels que ceux définis ci-dessus permet d'établir une valeur fonction de la différence de niveau entre les sommets 41 des reliefs des sculptures et leurs fonds 40.

Lorsque les sculptures de ces pneumatiques s'usent, l'usure correspond physiquement à une diminution de la distance séparant les niveaux des fonds 40 et des sommets 41, le sommet 41 étant toujours considéré comme une position de référence, puisque défini par le plan de la fenêtre 6 de la tranchée 5, en fait le niveau du sol sur lequel se déplace le véhicule sur lequel est monté ce pneumatique. De cette façon, on peut déterminer, à partir d'un certain seuil de différence entre les deux signaux définis ci-avant, l'instant où la bande de roulement des pneumatiques a atteint l'état d'usure maximum déterminé expérimentalement par le fabricant des pneumatiques au-delà duquel il deviendrait dangereux de continuer à rouler avec ces pneumatiques, et donc en avertir le conducteur.

Dans l'exemple décrit ci-dessus, le signal de référence est donné par une image formée sur le sommet 41 des sculptures, ce qui permet une adaptation à tous les types de pneus en obtenant des mesures par différentielle. Cependant, pour certaines applications, le signal de référence peut être donné par une source d'énergie indépendante.

L'exemple décrit ci-dessus l'a été par rapport à une seule source lumineuse 7 apte à éclairer aussi bien le fond des sculptures que leurs sommets. Cependant, il est évident que les pneumatiques ne pourront pas toujours passer sur le chemin de roulement 4, strictement au même endroit, ni avoir le même type de sculptures, ni être positionnés sur la fenêtre 6 de la tranchée 5 de façon que la source lumineuse puisse éclairer aussi bien le fond des sculptures que leur sommet.

Pour permettre au dispositif de donner des informations fiables quelles que soient les conditions de son utilisation, dans un mode de réalisation avantageux, il est prévu, pour une seule tranchée sensiblement perpendiculaire à la direction du déplacement des pneumatiques, une pluralité de couples "source lumineuse-cellule photosensible" associés à un même organe de comparaison 31, chaque couple "source-cellule" étant disposé dans des plans de mesure distants les uns des autres d'une valeur sensiblement égale à la largeur des sculptures et/ou à la distance séparant deux sommets de sculpture consécutifs.

De même, pour affiner la mesure et vérifier les résultats obtenus, il est avantageux d'effectuer cette mesure, non pas en un seul point de la circonférence de la bande de roulement du pneumatique, mais en plusieurs. C'est ainsi que le dispositif peut comporter une pluralité de tranchées sensiblement parallèles les unes aux autres et distantes d'une longueur inférieure à la circonférence des pneumatiques les plus petits aptes à passer par la voie déterminée.

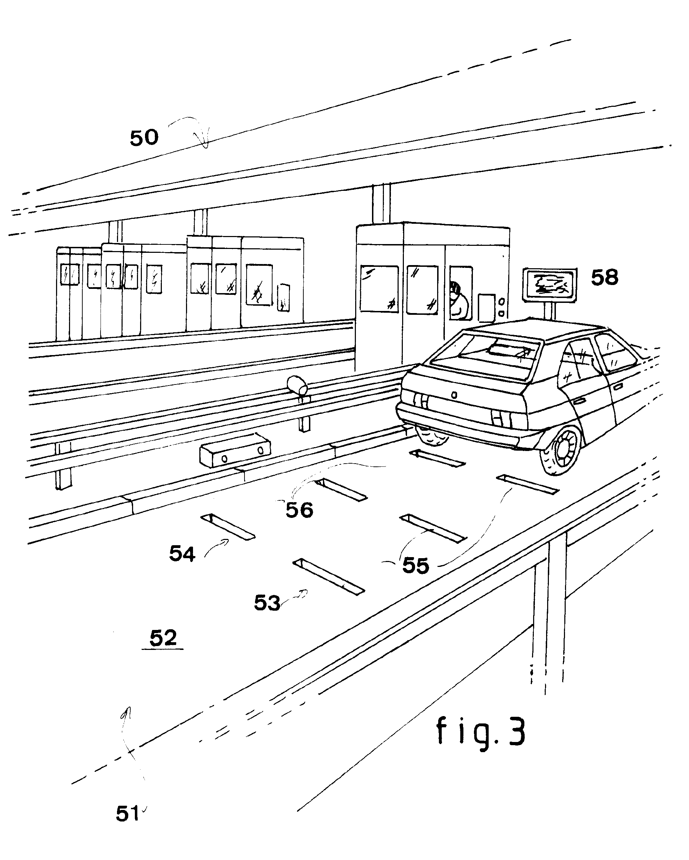

La figure 3 représente une possibilité avantageuse d'installation d'un dispositif selon l'invention au passage d'un poste de péage 50 sur une autoroute 51 puisque, dans ce cas, les véhicules sont obligés de passer sensiblement toujours au même endroit et, de plus, avec une vitesse relativement faible, ce qui permet d'augmenter la fiabilité de la mesure. Comme illustré sur cette figure, il est installé, dans un passage 52 d'un péage d'autoroute, une pluralité de dispositifs 53, 54 ... comme ceux qui ont été décrits ci-avant en regard des figures 1 et 2. L'installation schématisée sur la figure 3 comporte en réalité deux dispositifs 53, 54 à trois tranchées, respectivement 55 et 56, chaque dispositif devant analyser l'état d'usure des pneumatiques de l'un des côtés de chaque véhicule 58 passant sur les trois tranchées 55 ou 56. La distance séparant deux tranchées consécutives d'un même dispositif est avantageusement inférieure au tiers de la circonférence des plus petits pneumatiques aptes à passer sur ces tranchées.

Dans la présente description, il a été utilisé les termes de "faisceaux lumineux". Il est cependant bien entendu que ces termes ne doivent pas être compris comme une limitation de certains moyens mis en oeuvre dans l'invention aux seuls faisceaux de lumière dans le domaine du visible, mais servent à désigner tous les faisceaux d'ondes électromagnétiques, dans la mesure bien sûr où il existe des moyens technologiques répondant aux fonctions définies ci-dessus et pouvant les traiter selon la présente invention.

La mesure qui a été effectuée ci-dessus et illustrée notamment sur la figure 2 est une mesure dite "par triangulation", du fait que l'on utilise un focalisateur comme une lentille convergente. Dans ce cas, le récepteur photosensible 21 peut être constitué par une pluralité de surfaces réceptrices photosensibles situées sensiblement dans le plan de focalisation de la lentille. Dans un mode de réalisation préférentiel, les surfaces réceptrices sont constituées par les faces d'entrées d'un faisceau de fibres optiques dont les sorties sont par exemple couplées à une matrice de cellules photosensibles qui permet de délivrer à sa sortie un groupe de signaux représentatifs de la qualité lumineuse du faisceau reçu par la face d'entrée de chaque fibre optique. La méthode de mesure par triangulation étant connue en elle-même, elle ne sera pas décrite ici.

Le dispositif tel que décrit ci-dessus donne de bons résultats, mais nécessite des interventions relativement fréquentes, notamment pour effectuer le nettoyage, aussi bien de la sortie de la source lumineuse que des éléments de réception des faisceaux émis par la tache lumineuse sur la bande de roulement du pneumatique. On constate en effet que de nombreuses particules arrivent à se déposer sur ces éléments en tombant dans la tranchée par la fenêtre.

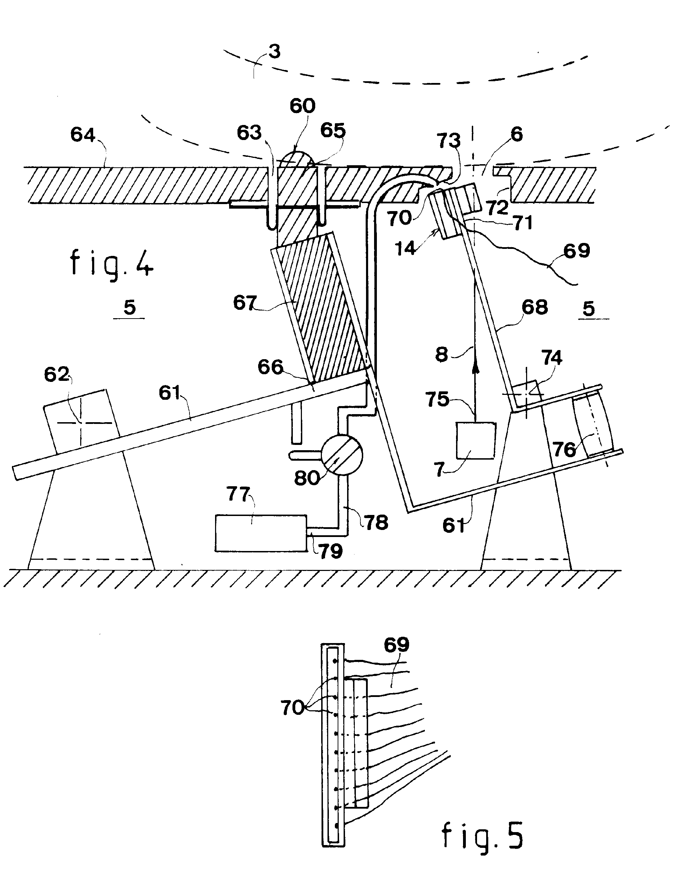

Les dispositifs tels qu'illustrés sur les figures 4 à 7 permettent de palier cet inconvénient.

Les figures 4 et 5 représentent un mode de réalisation avantageux d'un dispositif selon l'invention, qui peut fonctionner pendant une durée relativement longue sans nécessiter d'interventions de maintenance.

Selon ce mode de réalisation, le dispositif comporte des moyens commandables de protection d'au moins l'un des deux éléments "source lumineuse" et "capteur photosensible", de l'action de particules pouvant tomber dans la tranchée par la fenêtre, et avantageusement de ces deux éléments.

A cette fin, le dispositif comporte un détecteur 60 de passage d'un pneumatique 3 sur la fenêtre 6 de la tranchée 5. Ce détecteur est apte à délivrer un ordre de commande du type mécanique, représenté par la position d'un levier pouvant prendre deux positions selon qu'il y ait présence ou non d'un pneumatique sur la fenêtre 6. Cet ordre de commande est alors utilisé pour commander les moyens de protection.

Le détecteur de passage 60 illustré sur la figure 4 comporte un levier 61 monté pivotant autour d'un axe 62 dans la tranchée 5. Un orifice 63 relie la surface 64 de la voie 4 à l'intérieur de la tranchée. Un ergot 65 est monté coulissant dans l'orifice 63 de façon à pouvoir prendre au moins deux positions, une position émergente, comme illustré, lorsqu'il y a absence de pneumatique sur la fenêtre 6, et une position rentrée quand il y a présence d'un pneumatique sur cette fenêtre, le pneumatique appuyant sur cet ergot. L'ergot 65 est couplé avec l'extrémité 66 du levier 61, notamment par un arbre de transmission 67 avantageusement constitué par un cylindre en un matériau présentant une certaine élasticité, que les techniciens connaissent sous la dénomination "cylindre-bloc".

Les moyens commandables pour protéger la source lumineuse 7 et le capteur photosensible 14 sont constitués, sur la figure 4, par un bras 68 monté pivotant dans la tranchée 5 de façon à prendre deux positions. Dans ce mode de réalisation, le capteur photosensible 14 est constitué par un ensemble de fibres optiques 69, figure 5, dont les faces d'entrée 70 sont montées solidaires de l'extrémité 71 du bras 68 qui se trouve dirigée vers la fenêtre 6. Dans ce cas, les deux positions du bras sont définies respectivement par une première position dans laquelle les faces d'entrée des fibres sont en regard de la fenêtre 6, le bras 68 venant buter contre un rebord 72 de la fenêtre, la source lumineuse 7 étant positionnée dans la tranchée 5 de façon que son faisceau de sortie 8 puisse émerger de la tranchée 5 par la fenêtre 6 sans être occulté par le bras 68, et par une seconde position dans laquelle les faces d'entrée 70 des fibres sont en regard d'une partie 73 du plafond de la tranchée bordant la fenêtre 6.

L'axe de rotation 74 du bras 68 est positionné dans la tranchée de façon que, dans sa seconde position, le bras 68 coupe le faisceau 8 entre la sortie 75 de la source 7 et la fenêtre 6.

Ces moyens de protection comportent en outre une bielle 76 de couplage du levier 61 avec le bras 68 de façon que, pour la position du levier correspondant à l'absence de pneumatique sur la fenêtre, le bras 68 soit maintenu dans sa seconde position, et que, pour la position du levier correspondant à la présence d'un pneumatique sur la fenêtre, le bras 68 soit maintenu dans sa première position.

Il est cependant à souligner que, dans certains cas, notamment lors d'embouteillages de circulation, les véhicules peuvent rester immobiles pendant un temps relativement long. Si cet arrêt se produit alors qu'un pneumatique se trouve sur la fenêtre, ce dernier agit de façon permanente sur le détecteur de passage. Le bras 68 est ainsi maintenu dans sa première position et ne peut pas protéger le capteur photosensible 14 de l'action des particules qui peuvent tomber par la fenêtre. Pour pallier cet inconvénient, il est alors avantageux que la bielle de couplage 76 soit constituée par un déclencheur à constante de temps. De cette façon, le bras 68 est amené en regard de la fenêtre 6 dès que la présence du pneumatique sur cette fenêtre a été détectée, y est maintenu pendant un certain temps donné par la constante de temps du déclencheur, puis est automatiquement ramené dans sa seconde position comme illustré sur la figure 4, même si le pneumatique reste sur la fenêtre.

Un tel déclencheur peut être, par exemple, du type de ceux que l'on trouve dans les appareils photographiques, qui sont bien connus en eux-mêmes. Il ne sera donc pas décrit ici.

Dans un mode de réalisation avantageux, le dispositif comporte en outre des moyens pour nettoyer, par exemple, les faces d'entrée des fibres optiques, ces moyens étant commandables en fonction de l'ordre de commande délivré par le détecteur de passage d'un pneumatique.

De façon préférentielle, ces moyens pour nettoyer les faces d'entrée des fibres optiques sont constitués par une réserve 77 d'un fluide sous pression, un conduit 78 connecté à la sortie 79 de la réserve et débouchant dans la partie 73 du plafond de la tranchée 5, en regard des faces d'entrée 70 des fibres optiques lorsque le bras 68 est dans sa seconde position, et un obturateur 80 monté en série sur le conduit 78, cet obturateur étant commandable en fonction de l'ordre de commande délivré par le détecteur de passage d'un pneumatique sur la fenêtre, et avantageusement pendant une constante de temps déterminée pour ne laisser passer qu'une certaine quantité de fluide vers les faces 70, suffisante pour les souffler et donc les nettoyer en éliminant les impuretés qui s'y seraient déposées. Dans le mode illustré sur la figure 4, l'obturateur est commandé par le levier 61 lorsqu'il passe de la position "absence de pneumatique" à la position "présence de pneumatique", ce qui permet de nettoyer ces faces juste avant qu'elles ne reçoivent le faisceaux émis par la tache lumineuse sur le pneumatique et passant sur la fenêtre 6. L'obturateur 80 est de tout type, notamment celui connu sous la dénomination de "clapet à retour automatique".

Le fonctionnement du dispositif décrit ci-dessus en regard des figures 4 et 5 se déduit très facilement de la description structurelle et ne sera donc pas plus amplement explicité, essentiellement dans le but de ne pas alourdir la présente description.

Il est cependant à préciser que, dans ce mode de réalisation, le capteur photosensible est essentiellement constitué par les faces d'entrée d'une pluralité de fibres optiques dont les sorties sont connectées, comme mentionné précédemment, à une pluralité de cellules photosensibles. Dans ce cas, les faces d'entrée reçoivent directement les faisceaux émis par la tache lumineuse sans que ces derniers soient traités par un élément optique comme le focalisateur. De ce fait, le traitement des signaux émis par les cellules réceptrices photosensibles sera effectué selon le principe connu de la méthode de mesure dite "par rétroréflexion".

Dans l'exemple mentionné ci-dessus, les moyens pour protéger la source lumineuse et le capteur photosensible sont essentiellement des moyens qui permettent d'escamoter ou de protéger par écran protecteur un élément. L'écran protecteur est constitué par le bras 68 qui a une largeur suffisante pour cacher la source lumineuse quand le bras est dans sa seconde position.

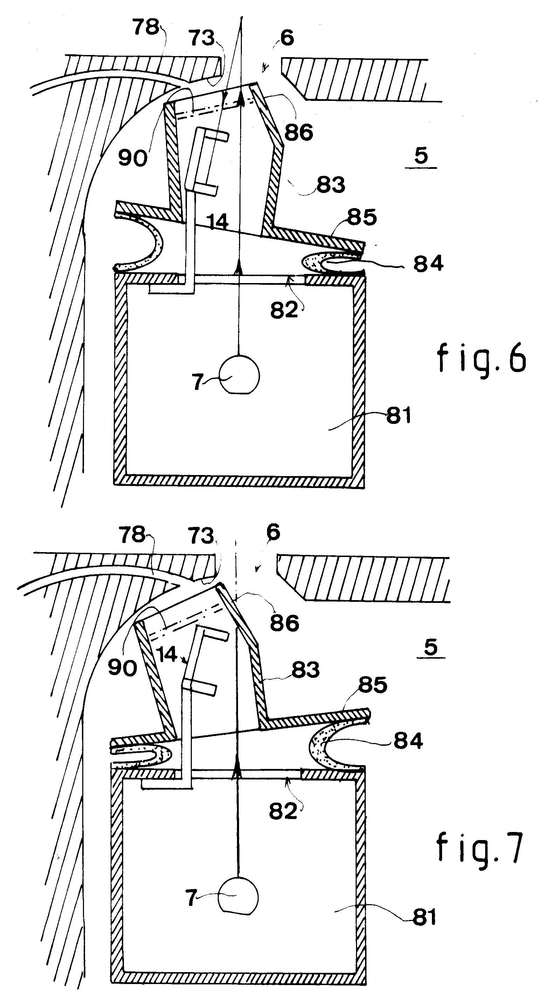

Les figures 6 et 7 donnent un exemple d'un autre mode de réalisation non-revendiqué, dans lequel les moyens de protection sont constitués par un seul écran qui permet d'isoler les deux éléments, des particules qui peuvent tomber dans la tranchée par la fenêtre 6.

Dans ce cas, le capteur 14 et la source lumineuse 7 sont solidarisés avec une embase 81 disposée dans la tranchée 5 et comportant une ouverture 82 tournée vers la fenêtre 6. L'écran protecteur est constitué par un manchon 83 et des moyens 84 pour monter le manchon pivotant par l'une de ses extrémités 85 sur l'embase 81, en entourant sensiblement l'ouverture 82.

Ce manchon peut donc prendre deux positions, une première position illustrée sur la figure 6 de façon que son autre extrémité 86 soit sensiblement en regard de la fenêtre 6 pour ne pas gêner la propagation des faisceaux émis par la source vers la bande de roulement du pneumatique, ni celle des faisceaux émis par la tache lumineuse 13 vers le capteur 14, et une seconde position illustrée sur la figure 7 dans laquelle l'extrémité 86 du manchon 83 se trouve en regard de la partie 73 du plafond de la tranchée 5 dans laquelle débouche par exemple l'extrémité du conduit 78 permettant l'envoi d'un fluide sous pression au moins vers le capteur 14 pour le nettoyer.

Avantageusement, les moyens 84 pour monter le manchon pivotant par rapport à l'embase sont constitués par une membrane à soufflet. En outre, le pivotement du manchon peut être commandé par un détecteur de passage d'un pneumatique sur la fenêtre, par exemple du même type que celui décrit en regard de la figure 4. Il suffit par exemple de coupler le levier 61 au manchon 83 de la même façon que le levier 61 était couplé au bras 68.

Il est de plus à souligner que l'utilisation d'un manchon tel que décrit ci-dessus permet de protéger la source 7 et le capteur photosensible 14 de façon plus efficace, en prévoyant, par exemple, de boucher l'ouverture de l'extrémité libre du manchon 83 par une paroi transparente 90 qui pourra être nettoyée de la même façon que décrit ci-dessus. Cette paroi pourra même être de temps à autre nettoyée manuellement et changée si cela est nécessaire, sans que l'on ait besoin d'intervenir sur la source et le capteur eux-mêmes.

## Revendications

1. Dispositif pour mesurer "à la volée" la profondeur des sculptures (2) sur la bande de roulement (12) d'un pneumatique (3) de véhicule lorsqu'il passe sur une voie déterminée (4), comportant au moins une tranchée ouverte (5) réalisée dans la voie au niveau du passage présumé du pneumatique, ladite tranchée débouchant sur ladite voie par au moins une fenêtre (6), au moins une source lumineuse (7) disposée dans ladite tranchée (5) pour émettre un faisceau lumineux (8) vers ladite fenêtre, au moins un capteur photosensible (14) apte à capter les faisceaux émis par la tache lumineuse que forme ledit faisceau sur la bande de roulement dudit pneumatique lorsqu'il passe sur ladite fenêtre et à délivrer un signal représentatif desdits faisceaux émis par la tache lumineuse, et des moyens (31) pour traiter ledit signal et en déduire la profondeur des sculptures sur ladite bande de roulement dudit pneumatique, caractérisé par le fait qu'il comporte des moyens commandables de protection d'au moins l'un des deux éléments "source lumineuse" (7) et "capteur photosensible" (14) de l'action de particules pouvant tomber dans ladite tranchée (5) par ladite fenêtre (6), un détecteur (60) de passage de pneumatique sur ladite fenêtre, ledit détecteur (60) étant apte à délivrer un ordre de commande pour commander lesdits moyens de protection et comportant un levier (61) monté pivotant dans ladite tranchée (5), un orifice (63) reliant la surface (64) de ladite voie à l'intérieur de ladite tranchée, un ergot (65) monté coulissant dans ledit orifice de façon qu'il puisse prendre au moins deux positions, une position émergente en absence de pneumatique sur ladite fenêtre et une position rentrée quand il y a présence d'un pneumatique sur ladite fenêtre, et des moyens de couplage (67) dudit ergot (65) avec ledit levier (61) pour que ledit levier puisse prendre deux positions correspondant chacune à l'une des deux dites positions dudit ergot et à une des deux valeurs possibles dudit ordre de commande.

2. Dispositif selon la revendication 1, caractérisé par le fait que les moyens commandables en fonction dudit ordre de commande pour protéger au moins l'un des deux éléments "source lumineuse" et "capteur photosensible" de l'action de particules pouvant tomber dans ladite tranchée par ladite fenêtre sont constitués par un bras (68) monté pivotant dans ladite tranchée de façon à prendre au moins deux positions, l'élément à protéger (14) étant monté solidaire dudit bras, et une bielle de couplage (76) dudit levier avec ledit bras de façon que, pour la position dudit levier correspondant à l'absence de pneumatique sur ladite fenêtre, ledit bras maintienne ledit élément en dehors de ladite fenêtre et que, pour la position dudit levier correspondant à la présence d'un pneumatique sur ladite fenêtre, ledit bras maintienne ledit élément en regard de ladite fenêtre.

3. Dispositif selon la revendication 1, caractérisé par le fait que les moyens commandables en fonction dudit ordre de commande pour protéger au moins l'un des deux éléments "source lumineuse" et "capteur photosensible" de l'action de particules pouvant tomber dans ladite tranchée par ladite fenêtre sont constitués par un manchon (83) monté pivotant dans ladite tranchée de façon à prendre au moins deux positions, ledit manchon entourant ledit élément (14, 7) à protéger, et une bielle de couplage (76) dudit levier avec ledit manchon de façon que, pour la position dudit levier correspondant à l'absence de pneumatique sur ladite fenêtre, ledit manchon ait son ouverture tournée en dehors de ladite fenêtre et que, pour la position dudit levier correspondant à la présence d'un pneumatique sur ladite fenêtre, ledit manchon ait son ouverture en regard de ladite fenêtre.

4. Dispositif selon l'une des revendications 2 et 3, caractérisé par le fait que ladite bielle de couplage (76) est constituée par un déclencheur à constante de temps.

5. Dispositif selon la revendication 3, caractérisé par le fait qu'il comporte une paroi transparente (90) obturant ladite ouverture dudit manchon (83).

6. Dispositif selon l'une des revendications 1 à 5, caractérisé par le fait qu'il comporte des moyens commandables pour nettoyer au moins l'un des deux éléments "source lumineuse" et "capteur photosensible".

7. Dispositif selon la revendication 6, caractérisé par le fait que lesdits moyens pour nettoyer au moins l'un des deux dits éléments sont commandables en fonction dudit ordre de commande délivré par le détecteur de passage de pneumatique.

8. Dispositif selon l'une des revendications 6 et 7, caractérisé par le fait que lesdits moyens commandables pour nettoyer au moins l'un des deux dits éléments sont constitués par une réserve de fluide (77) sous pression, un conduit (78) reliant ladite réserve avec l'intérieur de ladite tranchée, en un endroit (73) situé en regard d'au moins l'un des deux éléments, et un obturateur (80) dudit conduit, ledit obturateur étant commandable en fonction dudit ordre de commande délivré par le détecteur de passage de pneumatique et pendant une constante de temps déterminée pour laisser passer une certaine quantité de fluide sous pression vers ledit élément à nettoyer.

9. Dispositif selon l'une des revendications 1 à 8, caractérisé par le fait que ledit capteur photosensible (14) comporte un focalisateur (24) des faisceaux émis par ladite tache lumineuse et une première pluralité de surfaces réceptrices photosensibles (70) situées sensiblement dans le plan de focalisation dudit focalisateur en vue d'obtenir un traitement par triangulation.

10. Dispositif selon l'une des revendications 1 à 8, caractérisé par le fait que ledit capteur photosensible comporte une seconde pluralité de surfaces réceptrices photosensibles (70) situées pour recevoir les faisceaux émis par la tache lumineuse en vue d'obtenir un traitement par rétroréflexion.

## Patentansprüche

1. Vorrichtung für das "fliegende" Messen der Tiefe von Rillen (2) auf der Lauffläche (12) eines Fahrzeugreifens (3), wenn er einen vorbestimmten Weg (4) passiert, umfaßend mindestens eine offene Schwelle (5), ausgebildet in dem Weg in Höhe der vorgesehenen Passage des Reifens, welche Schwelle auf dem Weg über ein Fenster (6) mündet, mindestens eine Lichtquelle (7), die in der Schwelle (5) angeordnet ist zum Aussenden eines Lichtstrahls (8) in Richtung des Fensters, mindestens einen photoempfindlichen Sensor (14) zum Auffangen von Lichtstrahlen, die von dem Lichtfleck ausgehen, den der Lichtstrahl auf der Lauffläche des Reifens erzeugt, wenn dieser das Fenster passiert und zum Erzeugen eines Signals, das repräsentativ ist für die von dem Lichtfleck ausgehenden Strahlen und Mittel (31) zum Verarbeiten des Signals und Ableiten aus ihm der Tiefe von Rillen auf der Lauffläche des Reifens, dadurch gekennzeichnet, daß sie steuerbare Mittel umfaßt für den Schutz mindestens eines der beiden Elemente, "Lichtquelle" (7) und "photoempfindlicher Sensor" (14), gegen die Wirkung von Partikeln, die in die Schwelle (5) durch das Fenster (6) fallen können, daß ein Durchfahrdetektor (60) des Reifens auf dem Fenster vorgesehen ist, welcher Detektor (60) ausgebildet ist zum Erzeugen eines Steuerbefehls zum Steuern der Schutzmittel und umfaßend einen Hebel (61), der schwenkbeweglich in der Schwelle (5) gelagert ist, wobei eine Öffnung (63) die Oberfläche (64) des Weges mit dem Inneren der Schwelle verbindet, wobei ein Vorsprung (65) in der Öffnung verlagerbar ist derart, daß er mindestens zwei Positionen einnehmen kann, eine herausragende Position beim Fehlen des Reifens auf dem Fenster und eine eingeschobene Position, wenn sich ein Reifen auf dem Fenster befindet und Kupplungsmittel (67) des Vorsprungs (65) mit dem Hebel (61), damit der Hebel zwei Positionen einnehmen kann entsprechend jeweils einer der beiden genannten Positionen des Vorsprungs und einem von zwei möglichen Werten des Steuerbefehls.

2. Vorrichtung nach Anspruch 1, dadurch gekennzeichnet, daß die in Abhängigkeit von dem Steuerbefehl steuerbaren Mittel zum Schützen mindestens eines der beiden Elemente "Lichtquelle" und "photoempfindlicher Sensor" gegen die Wirkung von Partikeln, die in die Schwelle durch das Fenster fallen können, von einem Arm (68) gebildet sind, der schwenkbeweglich in der Schwelle derart montiert ist, daß er mindestens zwei Positionen einnehmen kann, wobei das zu schützende Element (14) mit dem Arm verbunden ist und daß ein Lenker (76) zum Kuppeln des Hebels mit dem Arm derart vorgesehen ist, daß für die Position des Hebels entsprechend dem Fehlen des Reifens auf dem Fenster der Arm das Element außerhalb des Fensters hält und daß für die Position des Hebels entsprechend dem Vorhandensein eines Reifens auf dem Fenster der Arm das Element gegenüber dem Fenster hält.

3. Vorrichtung nach Anspruch 1, dadurch gekennzeichnet, daß die in Abhängigkeit von dem Steuerbefehl steuerbaren Mittel zum Schützen mindestens eines der beiden Elemente "Lichtquelle" und "photoempfindlicher Sensor" gegen die Wirkung von Partikeln, die in die Schwelle durch das Fenster fallen können, von einer Hülse (83) gebildet sind, die schwenkbeweglich in der Schwelle derart angeordnet ist, daß sie mindestens zwei Positionen einnehmen kann, welche Hülse das zu schützende Element (14, 7) umschließt und daß ein Lenker (76) zum Kuppeln des Hebels mit der Hülse derart vorgesehen ist, daß für die Position des Hebels entsprechend dem Fehlen des Reifens auf dem Fenster die Hülse mit ihrer Öffnung aus dem Fenster herausgedreht ist und daß für die Position des Hebels entsprechend dem Vorhandensein eines Reifens auf dem Fenster die Hülse ihre öffnung dem Fenster zukehrt.

4. Vorrichtung nach einem der Ansprüche 2 und 3, dadurch gekennzeichnet, daß der Kupplungslenker (76) von einem Auslöser mit Zeitkonstante gebildet ist.

5. Vorrichtung nach Anspruch 3, dadurch gekennzeichnet, daß sie eine transparente Wandung (90) umfaßt, die die genannte Öffnung der Hülse (83) überdeckt.

6. Vorrichtung nach einem Ansprüche 3 bis 5, dadurch gekennzeichnet, daß sie steuerbare Mittel aufweist für die Reinigung mindestens eines der beiden Elemente "Lichtquelle" und "photoempfindlicher Sensor".

7. Vorrichtung nach Anspruch 6, dadurch gekennzeichnet, daß die Reinigungsmittel mindestens eines der beiden genannten Elemente steuerbar sind in Abhängigkeit von dem Steuerbefehl, geliefert von dem Durchfahrtdetektor des Reifens.

8. Vorrichtung nach einem der Ansprüche 6 und 7, dadurch gekennzeichnet, daß die steuerbaren Mittel für das Reinigen mindestens eines der beiden Elemente von einem unter Druck stehenden Fluidreservoir (77), einer das Reservoir mit dem Inneren der Schwelle an einer Stelle (73) gegenüber mindestens einem der beiden Elemente verbindenden Leitung (78) und einem Sperrorgan (80) der Leitung gebildet sind, welches Sperrorgan steuerbar ist in Abhängigkeit von dem Steuerbefehl, erzeugt von dem Durchfahrtdetektor des Reifens und während einer Zeitkonstante, die bestimmt ist zum Passierenlassen einer bestimmten Fluidmenge unter Druck in Richtung des zu reinigenden Elements.

9. Vorrichtung nach einem der Ansprüche 1 bis 8, dadurch gekennzeichnet, daß der photoempfindliche Sensor (14) einen Fokalisator (24) der von dem Lichtfleck ausgehenden Strahlen umfaßt und eine erste Mehrzahl von photoempfindlichen Empfangsflächen (70), die im wesentlichen in der Fokalisationsebene des Fokalisators angeordnet sind, um eine Verarbeitung durch Triangulation zu ermöglichen.

10. Vorrichtung nach einem der Ansprüche 1 bis 8, dadurch gekennzeichnet, daß der photoempfindliche Sensor eine zweite Mehrzahl von photoempfindlichen Empfangsflächen (70) aufweist, die angeordnet sind zum Empfang der von dem Lichtfleck ausgehenden Strahlen, um eine Verarbeitung durch Rückreflektion zu ermöglichen.

## Claims

1. A device for measuring, "on the run", the depth of the patterns (2) of the tread (12) of a vehicle tire (3) while the vehicle is travelling along a determined path (4) including at least one open trench (5) formed in the path where it is assumed that the tire will pass, said trench opening out into said path via at least one window (6), at least one light source (7) disposed in said trench (5) for emitting a light beam (8) towards said window, at least one photosensitive sensor (14) suitable for sensing the beams emitted by the light spot formed by said beam on the tread of said tire as it passes over said window, and for delivering a signal representative of said beams emitted by the light spot, and means (31) for processing said signal and for deducing therefrom the depth of the patterns of said tread of said tire, the device being characterized by the fact that it includes controllable means for protecting at least one of the two elements constituted by the light source (7) and the photosensitive sensor (14) from the effects of particles that may fall into said trench (5) through said window (6), a detector (60) for detecting the passage of a tire over said window, said detector (60) being suitable for delivering a control order to control said protection means and including a lever (61) pivotally mounted in said trench (5), an orifice (63) connecting the surface (64) of said path to the inside of said trench, a stud (65) slidably mounted in said orifice so as to be capable of taking up at least two positions, a projecting position when there is no tire on said window and a retracted position when there is a tire on said window, and coupling means (67) coupling said stud (65) and said lever (61) so that said lever is capable of taking up two positions, each corresponding to one of said two positions of said stud, and also to two possible values of said control order.

2. A device according to claim 1, characterized by the fact that said means that are controllable as a function of said control order for protecting at least one of the two elements constituted by the light source and the photosensitive sensor from the action of any particles that happen to fall into said trench through said window are constituted by an arm (68) pivotally mounted in said trench in such a manner as to take up at least two positions, the element to be protected (14) being mounted securely on said arm, and a coupling rod (76) coupling said lever with said arm in such a manner that, for the position of said lever that corresponds to the absence of a tire on said window, said arm holds said element outside said window, and that in the position of said lever corresponding to the presence of a tire on said window, said arm holds said element facing said window.

3. A device according to claim 1, characterized by the fact that the means that are controllable as a function of said control order for protecting at least one of the two elements constituted by the light source and the photosensitive sensor from the action of any particles that happen to fall into said trench through said window are constituted by a sleeve (83) pivotally mounted in said trench in such a manner as to take up at least two positions, said sleeve surrounding said element (14, 7) to be protected, and a coupling rod (76) coupling said lever with said sleeve in such a manner that for the position of said lever corresponding to the absence of a tire on said window, said sleeve has its opening facing away from said window, and for the position of said lever corresponding to the presence of a tire on said window, said sleeve has its opening facing said window.

4. A device according to claim 2 or 3, characterized by the fact that said coupling rod (76) is constituted by trip means having a time constant.

5. A device according to claim 3, characterized by the fact that it includes a transparent wall (90) closing said opening of said sleeve (83).

6. A device according to any one of claims 1 to 5, characterized by the fact that it includes controllable means for cleaning at least one of the two elements constituted by the light source and by the photosensitive sensor.

7. A device according to claim 6, characterized by the fact that said means for cleaning at least one of said two elements are controllable as a function of said control order issued by the detector for detecting the passage of the tire.

8. A device according to claim 6 or 7, characterized by the fact that said controllable means for cleaning at least one of said two elements are constituted by a supply (77) of fluid under pressure, a duct (78) connecting said supply with the inside of said trench at a location (73) situated facing at least one of the two elements, and a shutter (80) for said duct, said shutter being controllable as a function of said control order issued by the detector for detecting the passage of the tire and throughout a time constant determined to allow a certain quantity of fluid to pass under pressure towards said element that is to be cleaned.

9. A device according to any one of claims 1 to 8, characterized by the fact that said photosensitive sensor (14) includes focusing means (24) for focusing the beams emitted by said light spot, and a first plurality of photosensitive receiver surfaces (70) situated substantially in the focal plane of said focusing means for the purpose of performing processing by triangulation.

10. A device according to any one of claims 1 to 8, characterized by the fact that said photosensitive sensor includes a second plurality of photosensitive receiver surfaces (70) situated to receive the beams emitted by the light spot in order to obtain processing by retroreflection.
